# EUROPEAN PATENT APPLICATION

(11) **EP 4 797 742 A1**
(43) Date of publication of application: **26.08.2026**
(21) Application number: 24886358.1
(22) Date of filing: 01.11.2024
(51) Int. Cl.: H04W 8/02, H04W 8/26, H04W 48/18, H04W 40/24, H04W 60/04, H04W 84/04

(54) **METHOD AND APPARATUS FOR PROCESSING SIGNALING OF ROAMING TERMINAL**

(30) Priority: 02.11.2023 KR 20230150333; 08.12.2023 KR 20230177791
(71) Applicant: Samsung Electronics Co., Ltd., Suwon-si, Gyeonggi-do 16677 (KR)
(72) Inventor: KIM, Hyesung, Suwon-si Gyeonggi-do 16677 (KR); SUH, Dongeun, Suwon-si Gyeonggi-do 16677 (KR); LEE, Jicheol, Suwon-si Gyeonggi-do 16677 (KR)
(74) Representative: Gulde & Partner
(86) International application number: PCT/KR2024/017061
(87) International publication number: WO 2025/095687

(57) **Abstract**

The present disclosure relates to a 5G or 6G communication system for supporting higher data transmission rates. An operation method of a user equipment (UE) in a wireless communication system, according to an embodiment of the present disclosure, may comprise the steps of: receiving, from an access and mobility management function (AMF), a first message including routing indicator data update information transmitted from home-unified data management (UDM); generating a subscription concealed identifier (SUCI) on the basis of the routing indicator data update information; and transmitting, to the AMF, a second message for a registration request including the SUCI.

## Description

### [Technical Field]

The disclosure relates to a wireless communication system, and more particularly, to a method for routing and processing signaling of a UE roaming in a mobile communication system.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

### [Detailed Description of the Invention]

### [Technical Problem]

When a home network operator operates a plurality of PLMNs (e.g., when using a plurality of PLMN IDs), a method for selecting a PLMN processing signaling of a specific subscriber roaming and connecting a roaming network to the corresponding PLMN is not supported.

A method for routing signaling of a roaming UE to another core network operated by the home network operator or to a partner core network of the home network operator is not supported.

### [Technical Solution]

A method of operating a user equipment (UE) in a wireless communication system according to an embodiment of the disclosure may include receiving a first message including routing indicator data update information transmitted from a home-unified data management (H-UDM) from an access and mobility management function (AMF), generating a subscription concealed identifier (SUCI) based on the routing indicator data update information, and transmitting a second message for a registration request including the SUCI to the AMF.

A user equipment (UE) in a wireless communication system according to an embodiment of the disclosure includes a transceiver and a controller. The controller may receive a first message including routing indicator data update information transmitted from a home-unified data management (H-UDM) from an access and mobility management function (AMF). The controller may generate a subscription concealed identifier (SUCI) based on the routing indicator data update information. The controller may control to transmit a second message for a registration request including the SUCI to the AMF.

### [Advantageous Effects]

The method and device according to an embodiment of the disclosure may determine a PLMN providing a roaming value added service (RVAS) to which signaling traffic of a roaming UE should be routed and processed.

The method and device according to an embodiment of the disclosure may route and process signaling and traffic of a roaming UE to a specific PLMN according to an intention of the home network operator, or route traffic of the UE to a core network of a partner operator of the home network operator.

### [Brief Description of Drawings]

FIGS. 1A and 1B illustrate a 5G system structure supporting an edge computing roaming service according to an embodiment of the disclosure.
FIG. 2 illustrates an example of a network architecture for supporting a roaming value added service (RVAS) according to an embodiment of the disclosure.
FIGS. 3A and 3B illustrate a procedure for providing routing indicator data to a UE and a registration procedure using the provided routing indicator data according to an embodiment of the disclosure.
FIG. 4 illustrates a method for supporting an RVAS using a Routing indicator data update according to an embodiment of the disclosure.
FIG. 5 is a block diagram illustrating a UE according to an embodiment of the disclosure.
FIG. 6 is a block diagram illustrating a network entity according to an embodiment of the disclosure.
FIG. 7 illustrates a procedure for searching and discovering a network function of an RVAS provider PLMN according to an embodiment of the disclosure.

### [Mode for Carrying out the Invention]

Hereinafter, the operational principle of the disclosure is described below with reference to the accompanying drawings. The terms described below are ones defined considering functions in the disclosure. Since the terms may be varied according to the user's or operator's intent or custom, their definitions should be determined according to the contents throughout the disclosure.

The terms referring to network entities or network function entities as used herein, the terms referring to messages, and the term referring to identification information are provided as an example for ease of description. Thus, the disclosure is not limited by the terms, and such terms may be replaced with other terms denoting objects with equivalent technical concept.

Although terms and names as defined in the 5G system standard are used herein for ease of description, embodiments of the disclosure are not limited thereto or thereby, and the same may apply likewise to systems conforming to other standards.

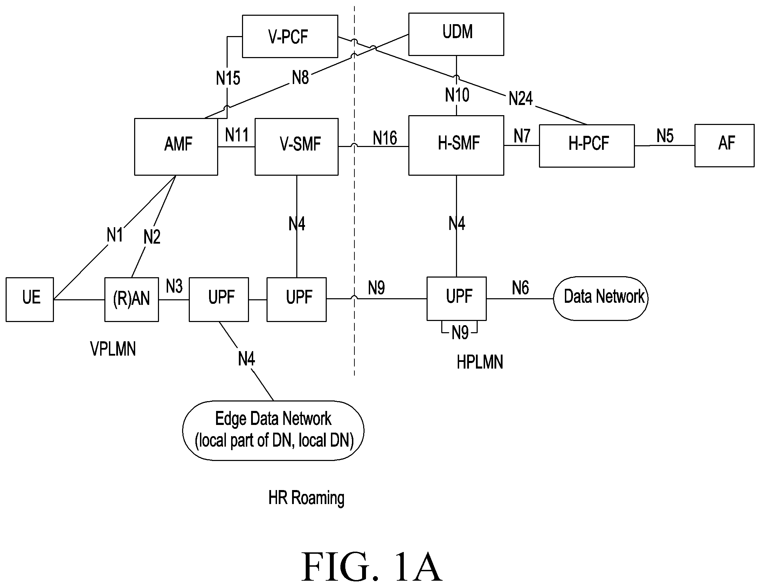

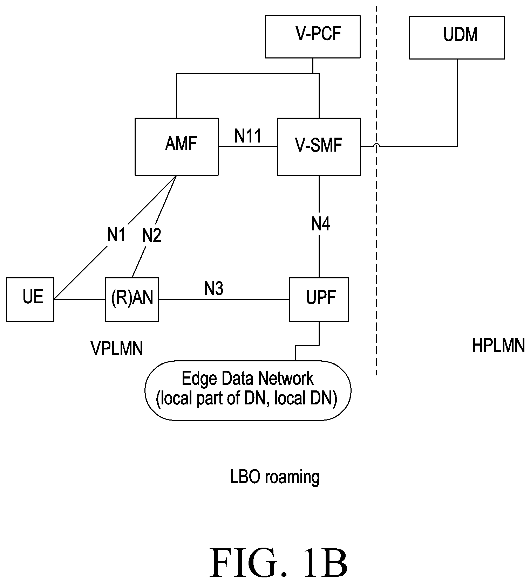

FIGS. 1A and 1B illustrate a 5G system structure supporting an edge computing roaming service according to an embodiment of the disclosure.

A 5G system structure supporting an edge computing service may include various network functions (NFs), some of which are illustrated in FIGS. 1A and 1B, such as an access and mobility management function (AMF), a session management function (SMF), a policy control function (PCF), unified data management (UDM), a data network (DN), or a local part of DN capable of local access to the data network, a user plane function (UPF), a (radio) access network ((R)AN), and a user equipment (UE).

Each NF supports the following functions.
- AMF provides functions for per-UE access and mobility management and may connect basically to one AMF per UE.
- DN means, e.g., an operator service, Internet access, or a third party service. The DN transmits a downlink protocol data unit (PDU) to the UPF or receives a PDU transmitted from UE from UPF. Local part of DN means a data network having a short data transmission path as it may local-access a portion of the DN. It may be used to denote a DN where an edge application server supporting an edge computing service is deployed.
- PCF receives information about packet flow from application server and provides the function of determining the policy such as mobility management or session management. Specifically, the PCF supports functions such as support of a unified policy framework for controlling network operations, providing a policy rule to allow CP function(s) (e.g., AMF or SMF)to execute a policy rule, and implementation of a front end for accessing subscription information related to policy decision in the unified data repository (UDR).
- SMF provides session management function and, if UE has multiple sessions, this may be managed per session by a different SMF.
- UDM stores, e.g., user's subscription data, policy data.
- UPF transfers downlink PDU received from DN to UE via (R)AN and transfers uplink PDU received from UE to DN via (R)AN. Uplink classifier (ULCL) refers to a UPF having a function of classifying and transmitting uplinks. Local UPF (L-UPF) serves as a PDU session anchor of a session transmitted to the local part of DN.
- EASDF processes the domain name system query transmitted by the UE according to the rule provided from the SMF. For example, the operations of transferring the DNS query transmitted from the UE to the DNS server, receiving a DNS response, transmitting related reporting to the SMF, and providing a DNS response to the UE may be performed.

FIG. 1A illustrates an example of a 5G system structure for home routing (HR) roaming; FIG. 1B illustrates an example of a 5G system structure for local breakout (LBO) roaming.

In FIG. 1A, for HR roaming, a visited public land mobile network (VPLMN) may include a UE, an (R)AN, a UPF, an AMF, a visited-SMF (V-SMF), and a visited-PCF (V-PCF), and a home public land mobile network (HPLMN) may include a UPF, a data network (DN), a home-SMF (H-SMF), a home-PCF (H-PCF), an AF, and a UDM. In FIG. 1B, for LBO roaming, the VPLMN may include a UE, an (R)AN, a UPF, an AMF, a V-SMF, and a V-PCF, and the HPLMN may include a UDM.

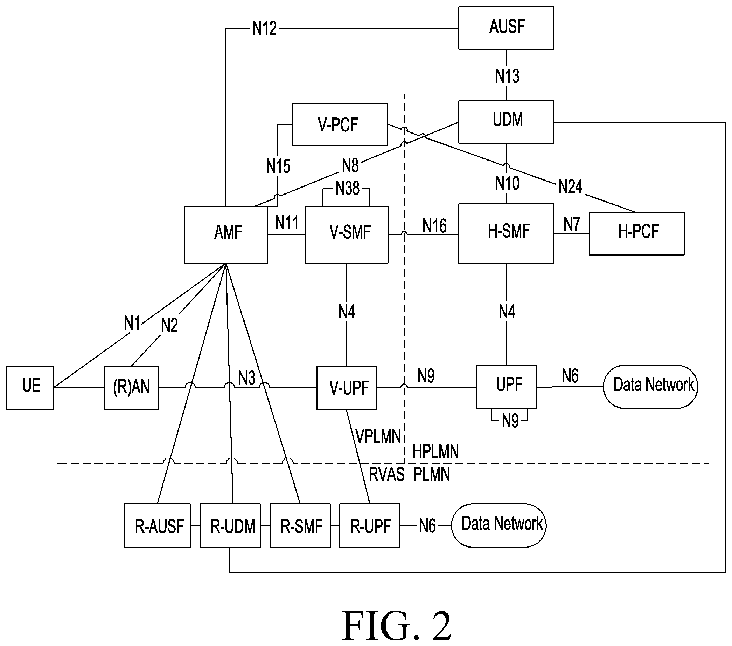

FIG. 2 illustrates an example of a network architecture for supporting a roaming value added service (RVAS) according to an embodiment of the disclosure. FIG. 2 illustrates a network architecture indicating a signaling and traffic transmission path related to a roaming UE to an RVAS providing PLMN (hereinafter RVAS PLMN) processing signaling and traffic of the UE instead of the HPLMN in a circumstance using a home routing session.

Referring to FIG. 2, the HPLMN may include an H-UPF, a Data Network, an H-SMF, an H-PCF, a UDM, and an AUSF, the VPLMN includes a UE, a RAN, a V-UPF, an AMF, a V-SMF, and a V-PCF, and the RVAS PLMN may include an R-AUSF, an R-UDM, an R-SMF, an R-UPF, and a Data Network.

Signaling related to the roaming UE may be transmitted to the R-AUSF or R-UDM deployed in the RVAS PLMN, instead of being transmitted from the AMF of the VPLMN to the AUSF or UDM of the HPLMN. Further, user plane data traffic of the roaming UE may be routed from the VPLMN UPF (V-UPF) to the R-UPF of the RVAS PLMN instead of the HPMN UPF (H-UPF).

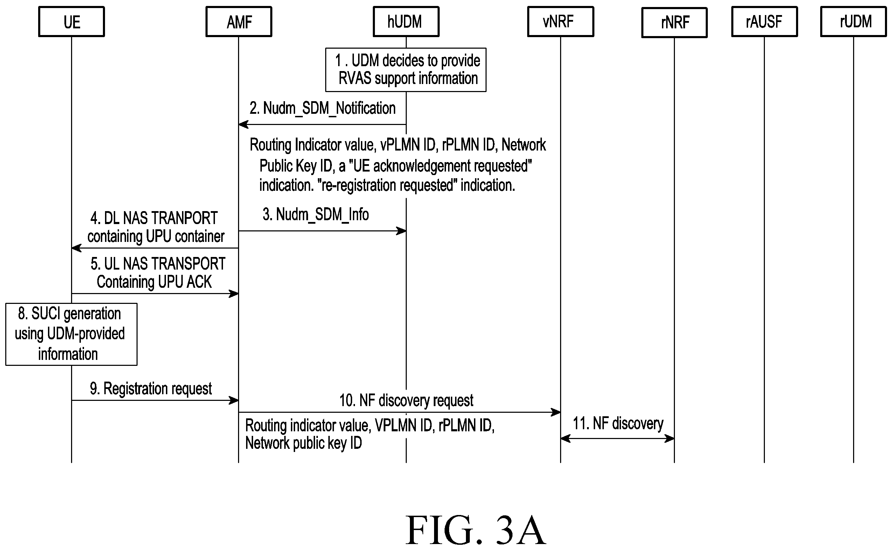

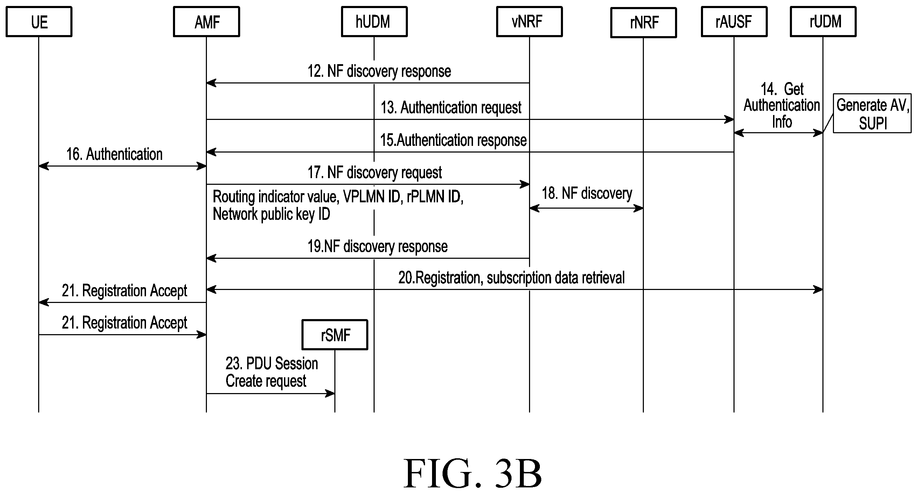

FIGS. 3A and 3B illustrate a procedure for providing routing indicator data to a UE and a registration procedure using the provided routing indicator data according to an embodiment of the disclosure.

Step 1. The home UDM (hUDM) of the UE (or UE) may determine to perform a routing indicator data update for supporting an RVAS considering UE subscription data. For example, in the hUDM, at least one of RVAS support information or RVAS allowed information, an RVAS provider PLMN ID (RVAS-providing PLMN ID; PLMN information providing an RVAS service; rPLMN ID), RVAS supporting VPLMN information, and RVAS supporting country information (e.g., MCC information) within the subscription data may be stored for a specific UE (or a specific UE group, or a specific UE identifier range, IMSI range), and the routing indicator data update may be determined to be performed for a UE having the corresponding information as the subscription data.

Step 1 may be performed when information indicating that the UE has applied for a roaming service is provided to the hUDM, or when information indicating that the UE has performed a registration for a roaming service in a specific country or a specific PLMN is provided to the hUDM. Further, whether to perform Step 1 may be determined according to an operator policy set in the hUDM.

Step 2. The hUDM may transmit routing indicator data update information for a specific UE to the AMF considering the subscription data information. The request may be performed using a Nudm_SDM_Notification message or by transmitting a separate message. The information transmitted by the hUDM to the AMF may include at least one of a routing indicator value, a VPLMN ID, an rPLMN ID, an RVAS network ID, country information (MCC), a Network public key ID, a priority value, a UE acknowledgement requested indication, and a re-registration requested indication. The hUDM may set the Routing indicator value to a value usable for searching and selecting the AUSF and UDM (rAUSF and rUDM) deployed in the RVAS provider PLMN (RVAS PLMN or rPLMN), instead of a value used for searching and selecting the AUSF and UDM of the HPLMN, and transmit the Routing indicator value to the AMF.

The UDM may transmit the VPLMN ID to the AMF as VPLMN information in which the routing indicator value may be used or should be used. The RVAS provider PLMN information (rPLMN ID) provided by the hUDM may be mapped to the routing indicator value and the VPLMN ID and may be information for indicating a PLMN in which the AUSF/UDM to be searched and selected through the routing indicator value is deployed. The network public key ID provided by the hUDM may be set and provided as a network public key ID usable in the RVAS provider PLMN or usable for searching and discovering the rAUSF/rUDM when provided together with the RVAS related information.

The hUDM may provide a plurality of combinations of the routing indicator value, the VPLMN ID, the rPLMN ID, the RVAS network ID, the country information (MCC), and the Network public key ID to the AMF. Further, the hUDM may provide the routing indicator value, the VPLMN ID, the HPLMN ID, the country information, and the Home Network public key ID information together with the RVAS PLMN related routing indicator value, VPLMN ID, rPLMN ID, RVAS network ID, and Network public key ID values, and the UE may attempt to access the HPLMN when the UE fails to access the PLMN providing the RVAS using the information received from the hUDM. For example, the hUDM may transmit the RVAS PLMN related (for routing signaling to the RVAS PLMN) routing indicator value, VPLMN ID, rPLMN ID, RVAS network ID, and Network public key ID information together with the routing indicator value, VPLMN ID, rPLMN ID, RVAS network ID, and Network public key ID information for routing signaling to the HPLMN to the AMF to provide the information to the UE, and may set a priority of the RVAS PLMN related information higher than that of the HPLMN related information so that the signaling of the UE may be preferentially routed to the RVAS PLMN, and may set the UE signaling to be routed to the HPLMN to continue the roaming service when routing to the RVAS PLMN is not possible or fails.

Step 3. When the AMF determines that the information received from the hUDM may not be transmitted to the UE immediately (when the UE is not reachable), the AMF may notify the hUDM of the UE Parameter Update data procedure transmission failure. In this case, the following procedures are not performed, and the AMF may wait until the AMF may signal to the UE.

Step 4. The AMF may transmit the routing indicator data update information received from the hUDM to the UE. The information may be included in a UE Parameter Update container and transmitted.

Step 5. The UE may transmit ACK information to the AMF when a UE acknowledgement requested indication is included in the information received from the AMF.

Step 6. The AMF may transmit a message notifying the hUDM that the UE has successfully received the routing indicator data update information.

Step 7. When the hUDM receives from the AMF that the UE has successfully received the routing indicator data update, the hUDM may notify the AMF and another NF of the routing indicator value.

Step 8. When the UE receives the routing indicator data update through the AMF, the UE may generate a subscription concealed identifier (SUCI) using the information included in the routing indicator data update instead of the information stored in the existing USIM or ME when generating the SUCI. The plurality of international mobile subscriber identities (IMSIs) may be configured in the UE. Each IMSI may be mapped to specific PLMN information (e.g., PLMN ID) or specific country (e.g., MCC) information. The UE may generate the SUCI by selecting an IMSI usable corresponding to information such as the routing indicator value, the VPLMN ID, and the rPLMN ID included in the routing indicator data received in the previous step. For example, the UE may select or identify the VPLMN ID or MCC received from the UDM corresponding to the PLMN ID value selected through the PLMN selection operation of the UE, and may generate the SUCI using the rPLMN ID or RVAS network ID, the routing indicator value, the Network public key ID value, and the IMSI corresponding to the VPLMN ID or MCC.

When generating a SUCI for Registration to the VPLMN ID selected during the PLMN selection in a roaming country other than the HPLMN, the UE may generate the SUCI using the routing indicator and the network public key ID received from the hUDM. If the UE has received a plurality of combinations of the routing indicator and the network public key ID from the UDM, the UE may select and use the routing indicator and the network public key ID corresponding to the MCC value or the VPLMN ID of the country in which the UE is roaming.

The plurality of combinations of the routing indicator and the network public key ID provided by the UDM may be provided, and a plurality of combinations of the routing indicator and the network public key ID corresponding to the MCC or the VPLMN ID may be present, and a priority value may be set for each combination.

When the UE receives a re-registration requested indication, the UE may perform a Registration procedure using the generated SUCI. In this case, the UE may attempt a Registration procedure by generating the SUCI using the routing indicator and network public key ID combination according to the priority value. For example, when the Registration attempted using the routing indicator and network public key ID combination corresponding to a specific MCC or VPLMN ID fails, the routing indicator and network public key ID having the next priority value may be used.

Even when the UE has not received the re-registration requested indication from the UDM, the UE may independently re-perform the registration procedure upon receiving the RVAS related routing indicator information.

Step 9. The UE may transmit a registration request message including the SUCI generated in Step 8 to the AMF. The UE may also provide a home network ID (HPLMN ID) together with the SUCI to the AMF.

Step 10. The AMF may perform a procedure for searching and selecting the rAUSF (AUSF of the RVAS PLMN) using the routing indicator information or the network public key ID included in the SUCI received from the UE. When rAUSF information corresponding to the routing indicator or the network public key ID is set in the AMF, the set information may be used. When the rAUSF information (address and identifier) corresponding to the routing indicator or the network public key ID is not set, the AMF may transmit an NF discovery request to the vNRF (NRF of the VPLMN). The NF discovery request message may include at least one of the SUCI, the routing indicator, or the network public key ID.

Step 11. The vNRF may select the rNRF (NRF of the RVAS PLMN) using the information received from the AMF, and may request and obtain the rAUSF information (address and identifier) while providing at least one of the SUCI, the routing indicator, and the network public key ID received from the AMF.

Step 12. The vNRF may provide the rAUSF information obtained in the previous step to the AMF.

Step 13. The AMF may transmit an authentication request to the rAUSF identified by the rAUSF information obtained in the previous step. The authentication request message may include the SUCI, the routing indicator, and the network public key information received from the UE.

Step 14. The rAUSF may obtain authentication information for the UE from the rUDM (UDM of the RVAS PLMN). The rAUSF may use internal configuration information or information such as the SUCI, the routing indicator, and the network public key to select the rUDM providing the authentication information. The rAUSF may provide the SUCI when requesting the authentication information, and the UDM may convert the SUCI into a SUPI and provide the SUPI.

Step 15. The rAUSF may provide the authentication information to the AMF as a response message to Step 13.

Step 16. The AMF may provide the authentication information to the UE for completing the authentication and receive a response thereto, and may forward the authentication related information received from the UE to the rAUSF to perform an authentication related operation. The AMF may obtain a successful authentication result and SUPI information from the rAUSF.

Step 17. The AMF may perform a search and selection operation for the rUDM using the information in the SUCI received from the UE and the SUPI obtained in the previous step. When rUDM information corresponding to the routing indicator or the network public key ID is set in the AMF, the set information may be used. When the rUDM information (address and identifier) corresponding to the SUPI, the routing indicator, or the network public key ID is not set, the AMF may transmit an NF discovery request to the vNRF. The NF discovery request message may include at least one of the SUPI, the SUCI, the routing indicator, or the network public key ID.

Step 18. The vNRF may select the rNRF using the information received from the AMF, and may request and obtain the rUDM information (address and identifier) while providing at least one of the SUPI, the SUCI, the routing indicator, and the network public key ID received from the AMF.

Step 19. The vNRF may provide the rUDM information obtained in the previous step to the AMF.

Step 20. The AMF may transmit a registration request and a subscription data request to the rUDM identified by the rUDM information obtained in the previous step. The rUDM may verify the SUPI included in the information received from the AMF and may identify whether the UE is a UE of an RVAS target subscriber. In the case of an RVAS target UE, the rUDM may provide Access and Mobility subscription data and subscription data related to SMF selection to the AMF.

Step 21. The AMF may transmit a Registration Accept message notifying the UE that the Registration has been successfully completed.

Step 22. The UE may transmit a PDU Session Establishment request message to the AMF to receive a data service.

Step 23. When receiving the PDU Session Establishment request message from the UE, the AMF may select an SMF connectable to the RVAS provider PLMN capable of providing a roaming service to the UE during vSMF selection. For example, the AMF may select the vSMF using information such as the routing indicator, the SUPI, and the rPLMN ID obtainable through the previous steps. Further, the AMF may select the rSMF deployed in the RVAS provider PLMN using information such as the routing indicator, the SUPI, and the rPLMN ID, and may transmit a PDU Session Establishment request message including the rSMF information (address and identifier) to the vSMF.

The vSMF may transmit a PDU Session creation request message to the rSMF based on the information received in Step 23.

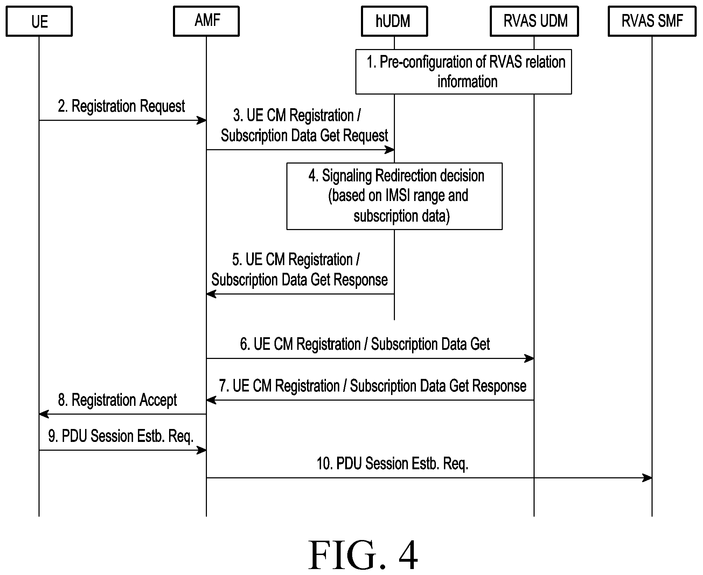

FIG. 4 illustrates a method for supporting an RVAS using a Routing indicator data update according to an embodiment of the disclosure.

Step 1. In the home UDM (hUDM) of the UE, at least one of RVAS support information or RVAS allowed information, an RVAS provider PLMN ID (RVAS-providing PLMN ID; PLMN information providing an RVAS service; rPLMN ID), RVAS supporting VPLMN information (VPLMN ID), RVAS supporting country information (e.g., MCC information), and rUDM information (address and identifier) deployed in the RVAS provider PLMN within the subscription data may be set for a specific UE (or a specific UE group, or a specific UE identifier range, IMSI range). The subscription data for a roaming UE corresponding thereto may be set in the rUDM (a UDM deployed in the RVAS provider PLMN and connectable to the hUDM).

Step 2. The UE may transmit a Registration request message to the AMF deployed in the VPLMN of the visiting country to receive a roaming service. The message includes SUCI information.

Step 3. The AMF selects the hAUSF and hUDM for converting the SUCI of the UE into the SUPI and performs an authentication procedure. After successful performance of the authentication procedure, the AMF may transmit a UE Context Management Registration or subscription data request message to the hUDM.

Step 4. When the hUDM receives the Registration request or subscription data request message from the AMF in the previous step, if RVAS service support/allowed information is stored for the VPLMN ID to which the UE is currently registered or the visiting country (country information identified by MCC) in the hUDM, the hUDM may determine to redirect signaling for the roaming UE. The RVAS service support/allowed information may be set corresponding to a specific VPLMN ID or country information (MCC) value for a specific UE or a specific UE group or a specific UE identifier range (e.g., SUPI or IMSI range). Further, an rPLMN ID list corresponding to the VPLMN ID or country information (MCC) associated with the RVAS service support/allowed information, and rUDM address and identifier information for each rPLMN ID may be stored in the hUDM.

Step 5. The hUDM may provide RVAS redirection information to the AMF as a response message to Step 3. The RVAS redirection information may include the rPLMN ID, rAUSF, and rUDM address information.

Step 6. The AMF may perform an authentication operation between the UE and the rPLMN using the rAUSF and rUDM address information received from the hUDM, and may transmit a UE Context Management Registration or subscription data request message to the rUDM after successful performance of the authentication.

Step 7. The rUDM may identify subscriber information for the roaming UE, and may provide subscription data necessary for access and mobility management related operations and SMF selection operations within the rPLMN to the AMF.

Step 8. When the AMF successfully receives the subscription data from the rUDM, the AMF may transmit a registration accept message to the UE.

Step 9. The UE may transmit a PDU Session Establishment request message to the AMF to use a data service later.

Step 10. The AMF may transmit a PDU Session creation request message to the vSMF. The message may include the rSMF identifier and address information selected by the AMF. The AMF may search and select the rSMF (SMF deployed in the RVAS provider PLMN) based on the rPLMN ID obtained through the previous steps, instead of the hSMF specifiable by the HPLMN ID available from the SUPI of the UE or subscription data information related to the UE, and may provide the rSMF to the vSMF. The vSMF may transmit a PDU session creation request message to the rSMF received from the AMF.

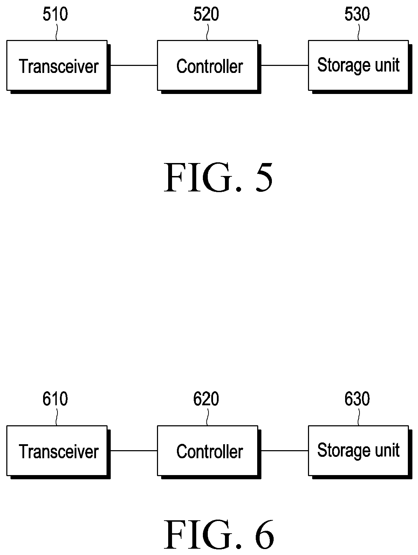

FIG. 5 is a block diagram illustrating a UE according to an embodiment of the disclosure.

In the embodiment of FIG. 5, the UE may be the UE or UE illustrated in each of FIGS. 1 to 4 and 7. Referring to FIG. 5, the UE may include a transceiver 510, a controller 520, and a storage unit 530. In the disclosure, the controller may be defined as a circuit, an application-specific integrated circuit, or at least one processor.

The transceiver 510 may transmit and receive signals to/from a base station or a network entity. The transceiver 510 may transmit/receive data to/from the base station or the network entity using, e.g., wireless communication.

The controller 520 may control the overall operation of the UE according to an embodiment. For example, the controller 520 may control a signal flow between the blocks to perform the operations described with reference to FIGS. 1 to 4 and 7.

The storage unit 530 may store at least one of information transmitted and received through the transceiver 510 and information generated through the controller 520. For example, the storage unit 530 may store information and data necessary for the method described with reference to FIGS. 1 to 4 and 7.

FIG. 6 is a block diagram illustrating a network entity according to an embodiment of the disclosure.

In the embodiment of FIG. 6, the network entity may be implemented as one of the base station (RAN), the AMF, the hUDM (UDM of the HPLMN), the vNRF (NRF of the VPLMN), the rNRF (NRF of the RVAS), the rAUSF (AUSF of the RVAS), the rUDM (UDM of the RVAS), and the rSMF (SMF of the RVAS) illustrated in each of FIGS. 1 to 4 and 7.

Referring to FIG. 6, the network entity may include a transceiver 610, a controller 620, and a storage unit 630. In the disclosure, the controller may be defined as a circuit or an application specific integrated circuit or at least one processor.

The transceiver 610 may transmit and receive signals to/from the UE, the base station, or another network entity. The transceiver 610 may transmit/receive data to/from the UE, base station or the other network entity using, e.g., wireless communication.

The controller 620 may control an overall operation of the network entity according to an embodiment proposed in the disclosure. For example, the controller 620 may control a signal flow between the blocks to perform the operations described with reference to FIGS. 1 to 4 and 7.

The storage unit 630 may store at least one of information transmitted and received through the transceiver 610 and information generated through the controller 620. For example, the storage unit 630 may store information and data necessary for the method described with reference to FIGS. 1 to 4 and 7.

According to an embodiment, in order to route signaling to the RVAS provider PLMN using the routing indicator information described in the embodiment of FIGS. 3A and 3B, the RVAS provider PLMN related information (a set of information including at least one of rAUSF, rUDM, and RVAS provider PLMN ID) may be modified.

After Step 9 of FIG. 3A, the AMF or the NF of the PLMN in which the UE is roaming may perform a procedure for searching and selecting the rAUSF (AUSF of the RVAS PLMN) using the routing indicator information or the network public key ID included in the obtained (e.g., received from the UE) SUCI. When rAUSF information corresponding to the MNC, MCC, or roaming service related PLMN ID, routing indicator, or network public key ID is set in the AMF, the set information may be used. When the rAUSF information (address and identifier) corresponding to the received routing indicator or network public key ID is not set, the AMF may transmit an NF discovery request to the vNRF (NRF of the VPLMN). The NF discovery request message may include at least one of the SUCI, the routing indicator, or the network public key ID.

According to an embodiment, the vNRF may determine to transmit an NF discovery request to the hNRF considering the information received from the AMF. For example, the vNRF may determine the hNRF considering the MNC and MCC information and transmit the NF discovery request to the hNRF. The NF discovery request transmitted by the vNRF to the hNRF may include at least one of information such as the SUCI, the routing indicator information or the network public key ID, and the VPLMN ID obtained by the AMF in the previous step, and NF information (NF information indicating the AUSF or UDM) to be searched.

According to an embodiment, when the hNRF receives an NF discovery request including at least one of the SUCI, the routing indicator information or the network public key ID, and the VPLMN ID from the vNRF and identifies that the request is a search request for the AUSF or UDM, the hNRF may perform an operation for determining or obtaining the AUSF or UDM information deployed in the RVAS provider PLMN corresponding to the information in the hNRF. For example, the hNRF may store RVAS provider PLMN related information (e.g., rAUSF identifier/address information, rUDM identifier/address information, RVAS provider PLMN ID, MCC, MNC information, etc.) that may correspond to a combination of information including at least one of the SUCI, an IMSI range, a SUPI range, a PLMN ID, an MCC, an MNC, a routing indicator, and a network public key ID.

According to an embodiment, the hNRF may identify the RVAS provider PLMN using at least one of information (e.g., routing indicator, MCC, MNC) received from the vNRF. The hNRF may also obtain information corresponding to the information received from the vNRF from the RVAS provider PLMN. The hNRF may identify the RVAS provider PLMN corresponding to the information received from the vNRF and request the rAUSF or rUDM information from the rNRF deployed in the RVAS provider PLMN. The hNRF may transmit an NF discovery request including at least one of the SUCI, the routing indicator information or the network public key ID, and the VPLMN ID to the rNRF.

According to an embodiment, the vNRF may perform an Authentication for the roaming UE and a SUCI deconcealment operation using the RVAS provider PLMN related information (e.g., rAUSF identifier/address information, rUDM identifier/address information, RVAS provider PLMN ID, MCC, MNC information, etc.) received from the hNRF, and may obtain and use the subscription data from the rUDM deployed in the RVAS provider PLMN.

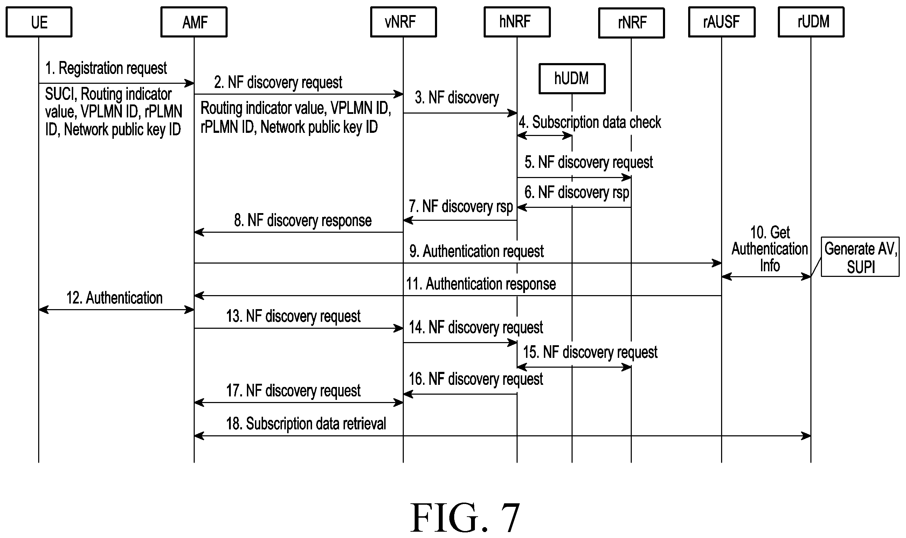

According to an embodiment, the rNRF may be an NRF deployed in the RVAS provider PLMN or a local hNRF deployed in the HPLMN or an NRF storing the RVAS provider PLMN related information. For example, the hNRF may identify the RVAS provider PLMN corresponding to the information received from the vNRF and request the rAUSF or rUDM information from another hNRF (e.g., local hNRF or specific hNRF, NRF capable of performing the role of rNRF) storing the RVAS provider PLMN related information. Such an operation may be performed through the procedure of FIG. 7.

FIG. 7 illustrates a procedure for searching and discovering a network function of an RVAS provider PLMN according to an embodiment of the disclosure.

Step 1. The UE may transmit a registration request message including at least one of a SUCI (which may include information such as a SUCI type and a Home Network ID), a routing indicator, a VPLMN ID, an HPLMN ID, an rPLMN ID, and a network public key ID to the AMF.

Step 2. The AMF may transmit an NF discovery request to the vNRF. The message may include at least one of the SUCI, the routing indicator, the VPLMN ID, the HPLMN ID, the rPLMN ID, the network public key ID, and NF information (type or identifier, or group identifier; for example, NF type information corresponding to the AUSF as information notifying of a search request for the AUSF).

Step 3. Based on the information received from the AMF, the UE may identify the HPLMN, and the vNRF may transmit an NF discovery request message to the hNRF. The message may include at least one of the SUCI, the routing indicator, the VPLMN ID, the HPLMN ID, the rPLMN ID, the network public key ID, and NF information (type or identifier, or group identifier, e.g., NF type information corresponding to the AUSF).

Step 4. The hNRF may determine a PLMN capable of processing the signaling of the UE based on the information received from the vNRF. For example, the hNRF may use the information received from the vNRF to obtain the subscription data from the hUDM, identify that the UE is an RVAS target, and determine the RVAS provider PLMN (rPLMN ID). Alternatively, the hNRF may identify the SUCI and routing indicator information in the information received from the vNRF based on the local configuration information to identify whether a specific SUCI or a specific routing indicator value is an RVAS target (whether a search and discovery for a network function deployed in the RVAS provider PLMN should be performed). According to an embodiment, the NF information (address and identifier, etc.) deployed in the RVAS provider PLMN may be stored in the hNRF, and the hNRF may provide the information of the NF deployed in the RVAS provider PLMN to the vNRF without additional interworking with the rNRF. In this case, Steps 5 to 6 may be omitted.

Step 5. The hNRF may determine the RVAS provider PLMN using the information received from the vNRF, and may transmit an NF discovery request message to the rNRF deployed in the RVAS provider PLMN. The message may include at least one of the SUCI, the routing indicator, the VPLMN ID, the HPLMN ID, the rPLMN ID, the network public key ID, and NF information (type or identifier, or group identifier) as information received from the vNRF. According to another embodiment, the rNRF may be an NRF deployed in the RVAS provider PLMN or a local hNRF deployed in the HPLMN or an NRF storing the RVAS provider PLMN related information. For example, the hNRF may identify the RVAS provider PLMN corresponding to the information received from the vNRF and request the rAUSF or rUDM information from another hNRF (e.g., local hNRF or specific hNRF, NRF capable of performing the role of rNRF) storing the RVAS provider PLMN related information. In this case, the rNRF in the following steps may be an hNRF other than the hNRF requested by the vNRF.

Step 6. The rNRF may determine the rAUSF using at least one of the SUCI, the routing indicator, the VPLMN ID, the HPLMN ID, the rPLMN ID, the network public key ID, and the NF information (type or identifier, or group identifier) as information received from the hNRF, and may transmit information (address, identifier, etc.) of the rAUSF to the hNRF.

Step 7. The hNRF may provide the rAUSF information obtained through the previous steps to the vNRF.

Step 8. The vNRF may provide the rAUSF information obtained through the previous steps to the AMF.

Steps 9 to 12. The AMF may perform an authentication operation using the rAUSF information obtained in the previous step. For example, the AMF may transmit an authentication request message including at least one of the SUCI, the routing indicator, the VPLMN ID, the HPLMN ID, the rPLMN ID, and the network public key ID to the rAUSF, and the rAUSF may search and determine the rUDM using the information received from the AMF. The rAUSF may obtain authentication information from the rUDM and provide the authentication information to the AMF and the UE. In this process, the AMF may obtain SUPI information.

Step 13. After completion of the authentication operation, the AMF may obtain the SUPI of the UE requesting the Registration procedure, and may perform an operation for searching and selecting the rUDM using at least one of the SUPI, the routing indicator, the VPLMN ID, the HPLMN ID, the rPLMN ID, and the network public key ID. For example, the AMF may transmit an NF discovery request including at least one of the SUPI, the routing indicator, the VPLMN ID, the HPLMN ID, the rPLMN ID, the network public key ID, and NF information (NF type, identifier, group identifier, etc. corresponding to the UDM) to the vNRF.

Step 14. The vNRF may determine the hNRF using the information received from the AMF, and may transmit an NF discovery request message. The message may include at least one of the SUPI, the routing indicator, the VPLMN ID, the HPLMN ID, the rPLMN ID, and the network public key ID.

Step 15. The hNRF may determine the PLMN (HPLMN or RVAS provider PLMN) corresponding to the SUPI using the information received from the vNRF, the information set in the hNRF, or the information obtainable from the hUDM. The hNRF may use the information set in the hNRF or may obtain and use the subscription data from the hUDM to perform a determination of the PLMN corresponding to the SUPI (determination of whether signaling for the SUPI should be processed in the HPLMN or the RVAS provider PLMN). For example, at least one of a PLMN ID list (HPLMN ID or RVAS provider PLMN ID, etc.) corresponding to the SUPI range (IMSI range), RVAS target information corresponding to the PLMN ID list (HPLMN ID or RVAS provider PLMN ID, etc.) corresponding to the SUPI range (IMSI range), and RVAS authorization information may be set in the hNRF. The PLMN ID list (HPLMN ID or RVAS provider PLMN ID, etc.) corresponding to the SUPI range (IMSI range), the RVAS target information, and the RVAS authorization information may be set in the hUDM, and the information may be provided to the hNRF. The hNRF may determine the RVAS provider PLMN corresponding to at least one of the SUPI, the routing indicator, the VPLMN ID, the HPLMN ID, the rPLMN ID, and the network public key ID, and may request and obtain the rUDM information from the rNRF (the hNRF requests by providing at least one of the SUPI, the routing indicator, the VPLMN ID, the HPLMN ID, the rPLMN ID, and the network public key ID to the rNRF), or may determine the rUDM information set in the hNRF. The rNRF may determine the rUDM information (address and identifier, etc.) corresponding to at least one of the SUPI, the routing indicator, the VPLMN ID, the HPLMN ID, the rPLMN ID, and the network public key ID, and may provide the rUDM information to the hNRF.

Step 16. The hNRF may provide the rUDM information obtained through the above-described steps to the vNRF.

Step 17. The vNRF may provide the rUDM information obtained through the previous step to the AMF.

Step 18. The AMF may provide at least one of the SUPI, the routing indicator, the VPLMN ID, and the HPLMN ID to the rUDM and obtain the subscription data. The RVAS authorization information corresponding to the SUPI may be included in the rUDM. The AMF may complete the Registration procedure using the subscription data received from the rUDM and transmit a Registration accept message to the UE.

## Claims

1. A method of operating a user equipment (UE) in a wireless communication system, the method comprising:
receiving, from an access and mobility management function (AMF), a first message including routing indicator data update information transmitted from a home-unified data management (H-UDM);
generating a subscription concealed identifier (SUCI) based on the routing indicator data update information; and
transmitting, to the AMF, a second message for a registration request including the SUCI.

2. The method of claim 1, wherein the routing indicator data update information includes at least one of a routing indicator value, a visited public land mobile network (VPLMN) ID, a registered PLMN (RPLMN) ID, a roaming value added service (RVAS) network ID, a mobile country code (MCC), a network public key ID, a priority value, a UE acknowledgement requested indication, or a re-registration requested indication.

3. The method of claim 1, wherein the UE is configured with a plurality of international mobile subscriber identities (IMSIs), and wherein each IMSI is mapped to a specific public land mobile network (PLMN) ID or a specific mobile country code (MCC).

4. The method of claim 2, further comprising:
transmitting ACK information to the AMF based on the routing indicator data update information including the UE acknowledgement requested indication.

5. The method of claim 2, further comprising:
generating the SUCI by selecting an international mobile subscriber identity (IMSI) corresponding to the routing indicator value, the VPLMN ID, or the RPLMN ID included in the routing indicator data update information.

6. The method of claim 2, further comprising:
generating the SUCI using the routing indicator value and the network public key ID based on generating a SUCI for registration to the VPLMN ID.

7. The method of claim 2, wherein based on a plurality of combinations of the routing indicator value and the network public key ID corresponding to the MCC or the VPLMN ID being exist, a priority value is set for each combination.

8. The method of claim 2, further comprising:
performing a registration procedure using the generated SUCI based on the routing indicator data update information including the re-registration requested indication.

9. A user equipment (UE) in a wireless communication system, the UE comprising:
a transceiver; and
a controller, wherein the controller is configured to:
receive, from an access and mobility management function (AMF), a first message including routing indicator data update information transmitted from a home-unified data management (H-UDM);
generate a subscription concealed identifier (SUCI) based on the routing indicator data update information; and
control to transmit, to the AMF, a second message for a registration request including the SUCI.

10. The UE of claim 9, wherein the routing indicator data update information includes at least one of a routing indicator value, a visited public land mobile network (VPLMN) ID, a registered PLMN (RPLMN) ID, a roaming value added service (RVAS) network ID, a mobile country code (MCC), a network public key ID, a priority value, a UE acknowledgement requested indication, or a re-registration requested indication.

11. The UE of claim 9, wherein the UE is configured with a plurality of international mobile subscriber identities (IMSIs), and wherein each IMSI is mapped to a specific public land mobile network (PLMN) ID or a specific mobile country code (MCC).

12. The UE of claim 10, wherein the controller is configured to control to transmit ACK information to the AMF based on the routing indicator data update information including the UE acknowledgement requested indication.

13. The UE of claim 10, wherein the controller is configured generate the SUCI by selecting an international mobile subscriber identity (IMSI) corresponding to the routing indicator value, the VPLMN ID, or the RPLMN ID included in the routing indicator data update information.

14. The UE of claim 10, wherein the controller is configured generate the SUCI using the routing indicator value and the network public key ID based on generating a SUCI for registration to the VPLMN ID.

15. The UE of claim 10, wherein based on a plurality of combinations of the routing indicator value and the network public key ID corresponding to the MCC or the VPLMN ID being exist, a priority value is set for each combination.
